# EUROPÄISCHE PATENTSCHRIFT

(11) **EP 2 118 535 B1**
(45) Veröffentlichungstag und Bekanntmachung des Hinweises auf die Patenterteilung: **19.06.2013**
(21) Anmeldenummer: 08707597.4
(22) Anmeldetag: 07.02.2008
(51) Int. Cl.: F16K 1/12, F16K 31/08, F16K 31/54

(54) **DROSSELVENTIL**
FLOW CONTROL VALVE
SOUPAPE D'ETRANGLEMENT

(30) Priorität: 13.02.2007 DE 102007007664
(43) Veröffentlichungstag der Anmeldung: 18.11.2009
(73) Patentinhaber: Mokveld Valves B.V., 2802 AJ Gouda (NL)
(72) Erfinder: ESVELDT, Vincent, NL-2803 LS Gouda (NL)
(74) Vertreter: Bauer, Dirk
(86) Internationale Anmeldenummer: PCT/EP2008/000939
(87) Internationale Veröffentlichungsnummer: WO 2008/098702

(56) Entgegenhaltungen:
- EP-A- 0 230 849
- DE-B- 1 263 430
- DE-U1- 8 906 269
- US-A- 4 452 423

## Beschreibung

Die Erfindung betrifft ein Drosselventil mit einem Gehäuse, das eine Einlassöffnung für ein Fluid unter einem Einlassdruck, eine Drossel, mittels derer das Fluid auf einen Auslassdruck drosselbar ist, und eine Auslassöffnung für das Fluid aufweist, sowie mit einem Stellelement außen an dem Gehäuse, mit einer rotierbaren Welle und einem Kolben, der innerhalb des Gehäuses in einem rohrförmigen Drosselkäfig axial verschiebbar ist, wobei mittels des Stellelements eine Rotation der Welle und über die Rotation der Welle eine axiale Verschiebung des Kolben induzierbar und durch die axiale Verschiebung des Kolben ein Drosselquerschnitt der Drossel einstellbar ist.

Drosselventile der vorgenannten Art sind in einer Vielzahl von Bauformen, beispielsweise aus dem Programm der Anmelderin allgemein bekannt. Solche Drosselventile mit einstellbarem Drosselquerschnitt werden aufgrund der im eingebauten Zustand guten Zugänglichkeit zum Austausch von Verschleißteilen sowie aufgrund des mechanisch vergleichsweise einfachen Einstellmechanismus traditionell zumeist in Winkelbauweise ("angle type valve"), also mit senkrecht zur Achse des Kolben und zur Auslassrichtung einströmendem Fluid konzipiert.

Zunehmend kommen in jüngerer Zeit - insbesondere wo eine Umlenkung der Strömungsrichtung unerwünscht ist - auch Drosselventile in Axialbauweise ("axial type valve"), also mit koaxial zur Ein- und Auslassrichtung verschiebbarem Kolben zum Einsatz. Diese weisen zudem bei gleichen strömungstechnischen Parametern geringere äußere Abmessungen und aufgrund der koaxialen Bauweise eine geringere Materialbelastung durch das strömende Fluid und damit einen verminderten Verschleiß auf.

An den bekannten Drosselventilen ist die rotierbare Welle mit dem Stellelement mechanisch, beispielsweise über einen Flansch fest verbunden. Die Rotationsbewegung der Welle wird außerhalb des Gehäuses über aufeinander gleitende Schraubengewinde - nach dem Prinzip von Schraube und Mutter - in eine Linearbewegung entweder unmittelbar des Kolben - bei Winkelbauweise - oder einer Schaltspindel umgesetzt. Bei Axialbauweise sind Schaltspindel und Kolben jeweils mit ineinander greifenden Schrägverzahnungen versehen, die eine Umlenkung der Linearbewegung ermöglichen.

Im Rahmen der Offshore-Förderung von Öl und Gas werden zunehmend erste Verarbeitungsschritte - beispielsweise die Kompression des geförderten Gases - unmittelbar an die Förderstelle am Meeresgrund verlegt. Mit dieser Tendenz geht ein erhöhter Bedarf an für den Untersee-Einsatz geeigneten Komponenten wie Drosselventilen einher:

Diese Komponenten müssen nicht nur aus Umweltschutzgründen emissionsfrei sein, also eine Abschirmung des strömenden Fluids (Öl, Gas) von dem umgebenden Seewasser gewährleisten und einen Austritt des Fluids in die Umgebung verhindern. Darüber hinaus ist auch ein Eindringen des hochgradig korrosiven und mit Mikroorganismen befrachteten Seewassers in das Ventil selbst oder in die Stellelemente unter allen Umständen zu vermeiden. Zuletzt ist auch jeder Kontakt insbesondere der Elektronik der Stellelemente mit dem geförderten Fluid, das aufgrund von Verunreinigung insbesondere mit Schwefelwasserstoff gleichfalls sehr aggressiv ist, unerwünscht.

Diese Abschirmung von Elementen des Drosselventils sowohl von dem strömenden Fluid als auch von der Umgebung einerseits und andererseits die absolute Emissionsfreiheit sind mit den Konzepten der bekannten Drosselventile nur unter erheblich gesteigertem Aufwand für die Dichtungen sowie unter verschärften Anforderungen an Material- und Oberflächenqualitäten zu erzielen. Außerdem bestehen seitens der Anwender teils erhebliche Vorbehalte gegenüber dem Einsatz nicht-metallischer Dichtsysteme und -mittel im Untersee-Einsatz.

EP 0 308 878 A1 und EP 0 681 130 A1 offenbaren Absperrventile mit rotierbarem Kugelkopf, FR 2 536 825 A1 mit linear bewegtem, über ein Stellgewinde angetriebenen Kolben, an denen jeweils die rotierbare Welle im Ventilgehäuse und das Stellelement außerhalb des Gehäuses durch eine magnetische Kopplung verbunden sind. So ist das strömende Fluids von der Umgebung getrennt, ohne dass die Abdichtung bewegter, das Gehäuse durchdringender Teile erforderlich wäre.

Die DE-A-1263430 offenbart ein Drosselventil mit einem Gehäuse, das eine Einlassöffnung für ein Fluid unter einem Einlassdruck, eine Drossel, mittels derer das Fluid auf einen Auslassdruck drosselbar ist, und eine Auslassöffnung für das Fluid aufweist, sowie mit einem Stellelement außen an dem Gehäuse, mit einer rotierbaren Welle und einem Kolben, der innerhalb des Gehäuses axial verschiebbar ist, wobei mittels des Stellelements eine Rotation der Welle und über die Rotation der Welle eine axiale Verschiebung des Kolben induzierbar und durch die axiale Verschiebung des Kolben ein Drosselquerschnitt der Drossel einstellbar ist, mit an dem Stellelement angebrachte Primärmagnete und an der Welle angebrachte Sekundärmagnete, wobei eine Rotation des Stellelements mittels magnetischer Kopplung der Primärmagnete mit den Sekundärmagneten auf die Welle übertragen wird.

### Aufgabe

Der Erfindung liegt die Aufgabe zugrunde, ein Drosselventil für Unterseeanwendungen, insbesondere in der Öl- und Gasförderung mit großen Rohrquerschnitten vorzuschlagen.

### Lösung

Ausgehend von den bekannten Drosselventilen wird nach der Erfindung vorgeschlagen, dass das Drosselventil an dem Stellelement angebrachte Primärmagnete, an der Welle angebrachte Sekundärmagnete sowie einen an der Welle angebrachten Wälzkörper-Gewindetrieb aufweist, wobei eine Rotation des Stellelements mittels magnetischer Kopplung der Primärmagnete mit den Sekundärmagneten auf die Welle übertragen und mittels des Wälzkörper-Gewindetriebs in die axiale Verschiebung des Kolben umgesetzt wird.

Durch die magnetische Kopplung sind - wie im Stand der Technik nach der DE 87 12 878 U1 - Stellelement und Innenraum des Gehäuses ohne das Erfordernis der Abdichtung bewegter Teile vollständig voneinander getrennt. Die rotierbare Welle - und bei Axialbauweise außerdem die Schaltspindel - sind vollständig von dem strömenden Fluid umgeben und damit in Axialrichtung druckentlastet.

Die durch die magnetische Kopplung von dem Stellelement auf die rotierbare Welle übertragbaren Stellmomente sind gering und erreichen insbesondere nicht die an den bekannten, im Untersee-Einsatz typischer Weise großvolumigen Komponenten erforderlichen Werte. Durch den Einsatz eines Wälzkörper-Gewindetriebs wird die Verlustleistung bei der Übersetzung von der Rotationsbewegung der Welle in eine Translationsbewegung und so bei ansonsten im Wesentlich unveränderten Konstruktionsprinzip das an der Welle erforderliche Stellmoment signifikant verringert.

Wälzkörper-Gewindetriebe sind insbesondere aus Verwendungen an Metallbearbeitungsmaschinen bekannte Antriebssysteme: Zur Übersetzung zwischen Rotations- und Translationsbewegung kommen Kugeln oder Gewindestangen ("Rollen") zum Einsatz, die zumindest auf dem translatorisch bewegten Bauteil abrollen. Der im Vergleich zur Gleitreibung zwischen Gewinden erheblich geringere Rollwiderstand der abrollenden Elemente ermöglicht eine sehr verlustarme Übersetzung. Die Wirkungsgrade von Rollen- und Kugelgewindetrieben sind im Wesentlichen vergleichbar. Rollengewindetriebe ("roller screw") bauen einerseits deutlich kompakter als Kugelgewindetriebe und ermöglichen andererseits sowohl eine Übersetzung von Translation auf Rotation als auch umgekehrt.

Ein erfindungsgemäßes Drosselventil kann einerseits eine Schaltspindel aufweisen, wobei die Rotation des Stellelements mittels des Wälzkörper-Gewindetriebs zunächst in eine Linearbewegung der Schaltspindel umgesetzt wird, sowie einen schrägverzahnten Zahnstangentrieb, mittels dessen die Linearbewegung in die axiale Verschiebung des Kolben umgesetzt wird. Ein- und Ausströmungsrichtung sind an einem solchen Drosselventil in Axialbauweise gleichgerichtet und koaxial zum Kolben.

Alternativ kann in einem erfindungsgemäßen Drosselventil die Rotation des Stellelements mittels des Wälzkörper-Gewindetriebs unmittelbar in die axiale Verschiebung des Kolben umgesetzt werden. In dieser Weise wird der Wälzkörper-Gewindetrieb insbesondere an einem Drosselventil in Winkelbauweise erfindungsgemäß eingesetzt.

In einer bevorzugten Ausführungsform weist ein erfindungsgemäßes Drosselventil ein elektromotorisches Antriebselement zum Einstellen des Drosselquerschnitts auf. Das erfindungsgemäße Drosselventil ist dann insbesondere zum Einsatz in automatisch gesteuerten Systemen geeignet. Alternativ kann das Stellelement eines erfindungsgemäßen Drosselventils auch pneumatisch, hydraulisch oder auch manuell durch ein Handrad oder einen Stellhebel angetrieben werden.

An einem solchen erfindungsgemäßen, elektromotorisch angetriebenen Drosselventil können insbesondere das Stellelement als Stator und die Welle als Rotor des Antriebselements, sowie die Primärmagnete als Elektromagnete und die Sekundärmagnete als Permanentmagnete ausgebildet sein. Durch die Integration von Stellelement und Welle in den elektromotorischen Antrieb wird die Konstruktion des erfindungsgemäßen Drosselventils signifikant vereinfacht. Die Baugröße ebenso wie Fertigungsaufwand und -kosten des erfindungsgemäßen Drosselventils werden reduziert.

In einer besonders bevorzugten Ausführungsform weist ein erfindungsgemäßes Drosselventil ein Federelement auf, das ausgehend von einer Grundstellung des Kolben mit der Rotation des Stellelements gespannt wird und mittels dessen der Kolben in die Grundstellung rückführbar ist. So weist ein erfindungsgemäßes Drosselventil eine Sicherung für den Ausfall des Antriebs auf.

Allgemein bekannte Drosselventile mit Ausfallsicherung weisen linear verschiebliche Stelleinrichtungen auf. Die Ausfallsicherung kann an solchen Ventilen einfach durch Anbringen einer Schraubenfeder realisiert werden. Die Magnetkopplung erfordert eine in beide Richtungen rotierbare Stelleinrichtung, also eine Umkehr der Betriebsrichtung, die - im Gegensatz zu einem Stellgewinde mit Schraubengewinde und Mutter - der Wälzkörpergewindetrieb ermöglicht: Eine auf die Schaltspindel wirkende Axialkraft wird durch die Wälzkörper in ein Drehmoment übersetzt und auf das Gewindetriebsgehäuse übertragen und versetzt dieses in Rotation.

An einem solchen erfindungsgemäßen Drosselventil in Axialbauweise kann das Federelement an der Schaltspindel angebracht sein und durch deren Linearbewegung gespannt werden. Bei Ausfall des Antriebs wirkt das Federelement zunächst unmittelbar auf die Schaltspindel und über die Schrägverzahnung mittelbar auf den Kolben, sowie über den Wälzkörper-Gewindetrieb mittelbar auf das Stellelement. In dieser Bauart kann insbesondere das Federelement unmittelbar innerhalb des Gehäuses angeordnet werden.

Die Kraft zum Spannen der Schraubenfeder muss dann von der Stelleinrichtung über die magnetische Kopplung und den Wälzkörpergewindetrieb auf die Schaltspindel übertragen werden. Entsprechend müssen sowohl die magnetische Kopplung als auch der Wälzkörpergewindetrieb zur Übertragung der entsprechenden Kräfte und Momente ausgelegt sein. Zudem steht die an der Schaltspindel ansetzende Schraubenfeder, da sie im Innern des Gehäuses angebracht ist, im Kontakt mit dem durch das Drosselventil fließenden Fluid. Die Materialwahl für die Schraubenfeder ist daher (wie für alle Teile im Innern des Gehäuses) insoweit eingeschränkt, als diese mit dem Fluid nicht reagieren, insbesondere durch das Fluid nicht korrodiert werden darf.

Alternativ kann an einem solchen erfindungsgemäßen Drosselventil - in Axial- oder Winkelbauweise - das Federelement an dem Stellelement angebracht und durch die Rotation des Stellelements gespannt werden. Bei Ausfall des Antriebs wirkt dann das Federelement unmittelbar auf das Stellelement und über den Wälzkörper-Gewindetrieb sowie gegebenen Falls über die Schrägverzahnung auf den Kolben. In dieser Bauart wird typischer Weise das Federelement mit dem Stellelement außerhalb des Gehäuses angeordnet. Hier kann eine Schraubenfeder oder eine Spiralfeder zum Einsatz kommen. Weiterhin alternativ kann das Federelement innerhalb des Gehäuses unmittelbar an die Kolbenstange angekoppelt werden.

An einem dieser erfindungsgemäßen Drosselventile mit Ausfallsicherung durch ein Federelement kann in der Grundstellung des Kolben der Drosselquerschnitt maximal geöffnet sein. Ein solches erfindungsgemäßes Drosselventil ist beispielsweise als Pumpverhütungsventil im Bypass zwischen Ein- und Auslass eines Kompressors einsetzbar. Alternativ kann der Drosselquerschnitt in der Grundstellung des Kolben je nach Anforderungen im Einzelfall vollständig geschlossen oder in einer beliebigen definierten Zwischenstellung vorgesehen werden.

Der Wälzkörper-Gewindetrieb eines erfindungsgemäßen Drosselventils erfüllt vorzugsweise die NACE- und ISO-Standards für Korrosionsschutz in der Öl- und Gasindustrie. Der Wälzkörper-Gewindetrieb muss dann nicht aufwändig von dem strömenden Fluid abgeschirmt werden, was die Konstruktion vereinfacht und die Anforderungen an Material und Fertigungstoleranzen signifikant verringert. Beispielsweise kann hierzu ein Rollengewindetrieb in seinen bewegten Teilen in einem keramischen Werkstoff ausgeführt sein.

Ein erfindungsgemäßes Drosselventil kann - beispielsweise mittels eines Permanentmagneten und eines elektromagnetischen Gebers an einem der bewegten Bauteile - berührungslos eine Positionsanzeige ansteuern. So wird die mechanische Unsicherheit der magnetischen Kopplung wirksam vermieden.

### Ausführungsbeispiel

Die Erfindung wird nachfolgend anhand von zwei Ausführungsbeispielen erläutert. Es zeigen
- Fig. 1: ein erstes erfindungsgemäßes Drosselventil,
- Fig. 2: ein zweites erfindungsgemäßes Drosselventil und
- Fig. 3: ein Detail der erfindungsgemäßen Drosselventile.

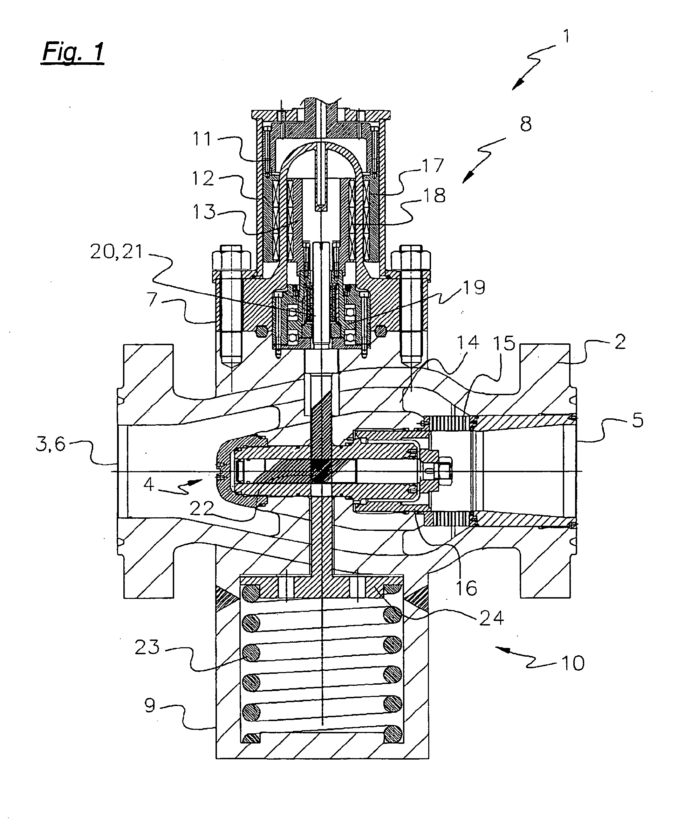

Das in Figur 1 gezeigte erste erfindungsgemäße Drosselventil 1 weist ein Gehäuse 2 auf mit einer Einlassöffnung 3 für ein nicht dargestelltes Fluid unter Einlassdruck, mit einer Drossel 4, mittels derer das Fluid auf einen Auslassdruck drosselbar ist, und mit einer Auslassöffnung 5 für das Fluid. Das Gehäuse 2 besteht aus einem gegossenen Ventilkorpus 6, einem an den Ventilkorpus 6 außen angeschraubten Gehäuse 7 einer Stelleinrichtung 8 und einem der Stelleinrichtung 8 gegenüber gleichfalls an den Ventilkorpus 6 angeschweißten Gehäuse 9 einer Sicherheitseinrichtung 10.

Das Drosselventil 1 weist ein der Stelleinrichtung 8 topfförmig überstülptes rotierbares Stellelement 11 auf, das von einem wiederum mit der Stelleinrichtung 8 verschraubten topfförmigen Käfig 12 gehalten wird. Während das gesamte Gehäuse 2 des Drosselventils 1 im Wesentlichen von dem Fluid durchströmt wird, ist dieser Käfig 12 mit einem umwelt- und insbesondere seewasserverträglichen Drucköl gefüllt.

Innerhalb der Stelleinrichtung 8 weist das Drosselventil 1 eine rohrförmige rotierbare Welle 13 auf. Die Drossel 4 ist in dem Ventilkorpus 6 mittels Stegen 14 fest eingebaut. Sie weist einen rohrförmigen, radial durchbrochenen Drosselkäfig 15 und einen in diesem axial verschiebbaren Kolben 16 auf. Durch Verschieben des Kolben 16 werden die nicht dargestellten Durchbrüche des Drosselkäfigs 15 sukzessiv verschlossen oder geöffnet. So wird der wirksame Drosselquerschnitt des Drosselventils 1 eingestellt.

An dem Stellelement 11 sind als Primärmagnete 17 und an der Welle 13 als Sekundärmagnete 18 jeweils mehrere Permanentmagnete angebracht. Die Welle 13 ist mit einem Stützgehäuse 19 eines Wälzkörper-Gewindetriebs 20 verschraubt, der eine Rotation der Welle 13 in eine Linearbewegung einer Schaltspindel 21 übersetzt. Der Wälzkörper-Gewindetrieb 20 besteht im Wesentlichen aus einem öl- und gasbeständigen Werkstoff.

Die Schaltspindel 21 verläuft innerhalb des Gehäuses 2 des Drosselventils 1 von dem Gehäuse 7 der Stelleinrichtung 8 durch den Ventilkorpus 6 und die Drossel 4 bis in das Gehäuse 9 der Sicherheitseinrichtung 10. In der Drossel 4 ist die Schaltspindel 21 schrägverzahnt und bildet im Eingriff mit dem hier gleichfalls schrägverzahnten Kolben 16 einen Zahnstangentrieb 22, der die Linearbewegung der Schaltspindel 21 in die hierzu senkrechte axiale Verschiebung des Kolben 16 übersetzt.

Die Sicherheitseinrichtung 10 besteht im Wesentlichen aus einem Federelement 23, hier in Form einer Schraubenfeder, das in der dargestellten Grundstellung des Drosselventils 1 dessen Drosselquerschnitt maximal geöffnet hält. Mit einer axialen Verschiebung des Kolben 16 aus der Grundstellung wird der Drosselquerschnitt verringert und zugleich eine mit der Schaltspindel 21 verbundene Druckplatte 24 in der Sicherheitseinrichtung 10 gegen das Federelement 23 verschoben. Vermindert sich das Drehmoment an dem Stellelement 11 unter einen durch die Federkraft definierten Wert, so öffnet die Sicherheitseinrichtung 10 selbsttätig den Drosselquerschnitt bis in die Grundstellung.

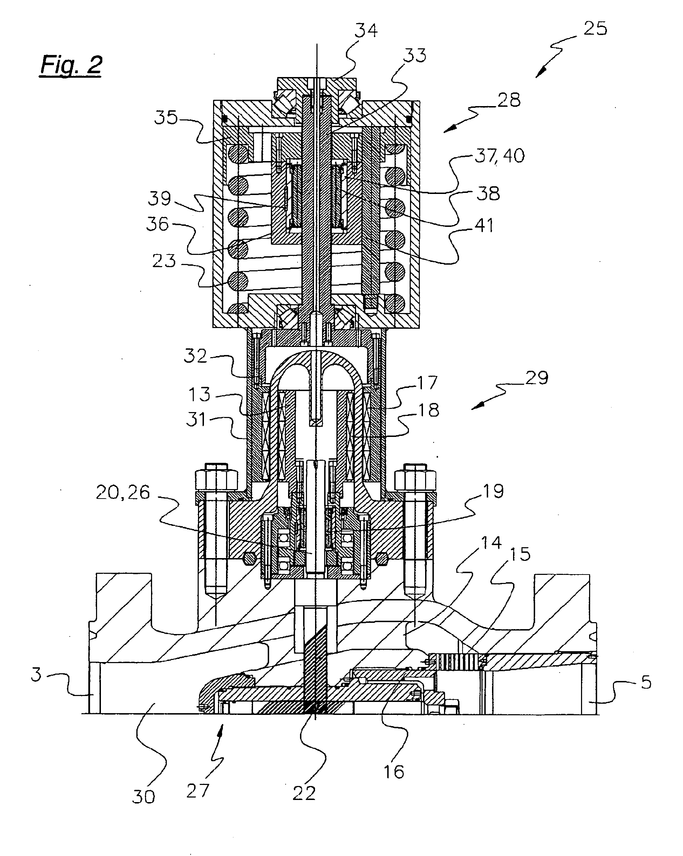

Das in Figur 2 gezeigte zweite erfindungsgemäße Drosselventil 25 entspricht in den Grundzügen der Konstruktion und bis in konstruktive Details dem ersten Drosselventil 1. Identische Bauteile und -gruppen sind daher in Figur 2 entsprechend Figur 1 gekennzeichnet. Im Folgenden werden noch die Unterschiede zum ersten Drosselventil 1 beschrieben.

In dem zweiten Drosselventil 25 verläuft die Schaltspindel 26 bis in die Drossel 27 und endet in dieser. Die Sicherheitseinrichtung 28 ist nicht gegenüber der Stelleinrichtung 29 an dem Ventilkorpus 30 angebracht, sondern fest mit dem Käfig 31 verbunden, der das Stellelement 32 hält. Dieses Stellelement 32 ist mit einer rotierbaren Welle 33 verschraubt, die die Sicherheitseinrichtung 28 durchdringt und in einem Flansch 34 zur Befestigung eines nicht dargestellten Antriebselements endet.

Die Sicherheitseinrichtung 28 besteht wiederum im Wesentlichen aus einem Federelement 23 in Form einer Schraubenfeder, das dessen Drosselquerschnitt maximal geöffnet hält. Eine Druckplatte 35 in der Sicherheitseinrichtung 28 ist mit einem Stützgehäuse 36 eines Rollengewindetriebs 37 verschraubt: Die Rollen 38 sind in dem Rollengewindetrieb 37 rotierbar gelagert. Das Federelement 23 übt eine Axialkraft auf eine Druckplatte 35 aus. Die Rollen 38 des Rollengewindetriebs 37 übersetzen diese Axialkraft in ein Drehmoment auf die Welle 33. Innerhalb des Stützgehäuses 36 hindert eine Passfeder 39 eine Verdrehung gegenüber dem Gewindetriebegehäuse 40. Ein Führungsstab 41 hindert die Druckplatte 35 an einer Drehung um die Welle 33. Die Sicherheitseinrichtung 28 des zweiten Drosselventils 25 ist mit demselben umweltverträglichen Öl gefüllt wie der Käfig 31. Ein Führungsstab 41 verhindert eine unerwünschte Rotationsbewegung der Druckplatte 35, des Stützgehäuses 36 und des Gewindetriebsgehäuses 40.

Figur 2 zeigt ein im Fehlerfall, also bei Ausfall des auf das Stellelement 32 von Außen wirkenden Stellmoments öffnendes Drosselventil 25 in vollständig geöffneter Position. Beim Schließen des Drosselventils 25 wird die Rotation des Stellelements 32 zugleich über die Welle 33, den Rollengewindetrieb 37 und die Druckplatte 35 in eine axiale Verkürzung des Federelements 23 übersetzt. Im Fehlerfall übt das Federelement 23 über die Druckplatte 35 auf den Rollengewindetrieb 37 eine Axialkraft aus und bewirkt über diese eine Drehbewegung der Welle 33 und des Stellelements 32, um das Drosselventil wieder zu öffnen. Die hier außerhalb des Gehäuses angeordneten Elemente der Sicherheitseinrichtung 28 stehen nicht in Kontakt mit dem im Drosselventil fließenden Fluid und können daher im Vergleich zum Drosselventil 1 gemäß Figur 1 einfacher ausgelegt und preisgünstiger gefertigt werden.

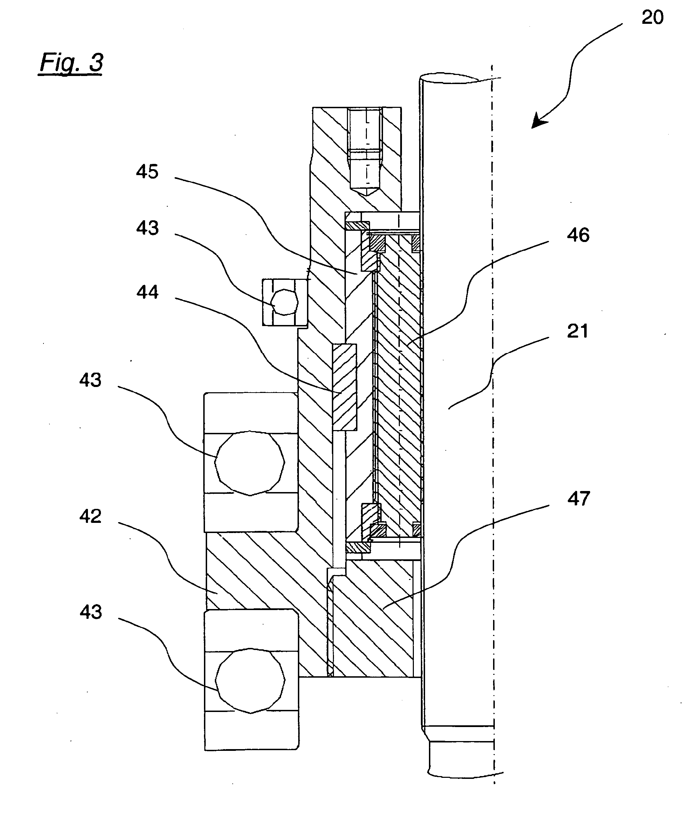

Figur 3 zeigt im Detail den Wälzkörpergewindetrieb 20 aus den Drosselventilen 1 und 25 gemäß den Figuren 1 und 2. Der Wälzkörpergewindetrieb 20 ist in einem Stützgehäuse 42 untergebracht, das auf Wälzlagern 43 axial und radial am (hier nicht dargestellten) Gehäuse 2 abgestützt und unmittelbar mit dem Sekundärmagnet 18 verbunden ist. Eine Drehbewegung des Stützgehäuses 42 wird auch hier mittels einer Passfeder 44 auf das Gewindetriebsgehäuse 45 des Wälzkörpergewindetriebs 20 übertragen. Die Wälzkörper 46 des Wälzkörpergewindetriebs 20 übersetzen die Rotation des Gewindetriebsgehäuses 45 in eine lineare Bewegung der Schaltspindel 21. Der Wälzkörpergewindetrieb 20 ist in dem Stützgehäuse 42 mittels einer eingeschraubten Mutter 47 gesichert.

Der Wälzkörpergewindetrieb 20 wurde aufgrund des hohen Wirkungsgrads als Rollengewindetrieb ausgestaltet. Mit einem Rollengewindetrieb können auch die hohen Schließgeschwindigkeiten realisiert werden, die erforderlich sind, um die Weiterleitung von Druckstößen zu vermeiden.

In den Figuren sind

| | |
|---|---|
| 1 | Drosselventil |
| 2 | Gehäuse |
| 3 | Einlassöffnung |
| 4 | Drossel |
| 5 | Auslassöffnung |
| 6 | Ventilkorpus |
| 7 | Gehäuse |
| 8 | Stelleinrichtung |
| 9 | Gehäuse |
| 10 | Sicherheitseinrichtung |
| 11 | Stellelement |
| 12 | Käfig |
| 13 | Welle |
| 14 | Steg |
| 15 | Drosselkäfig |
| 16 | Kolben |
| 17 | Primärmagnet |
| 18 | Sekundärmagnet |
| 19 | Stützgehäuse |
| 20 | Wälzkörper-Gewindetrieb |
| 21 | Schaltspindel |
| 22 | Zahnstangentrieb |
| 23 | Federelement |
| 24 | Druckplatte |
| 25 | Drosselventil |
| 26 | Schaltspindel |
| 27 | Drossel |
| 28 | Sicherheitseinrichtung |
| 29 | Stelleinrichtung |
| 30 | Ventilkorpus |
| 31 | Käfig |
| 32 | Stellelement |
| 33 | Welle |
| 34 | Flansch |
| 35 | Druckplatte |
| 36 | Stützgehäuse |
| 37 | Rollengewindetrieb |
| 38 | Rolle |
| 39 | Passfeder |
| 40 | Gewindetriebshäuse |
| 41 | Stab |
| 42 | Stützgehäuse |
| 43 | Wälzlager |
| 44 | Passfeder |
| 45 | Gewindetriebsgehäuse |
| 46 | Wälzkörper |
| 47 | Mutter |

## Patentansprüche

1. Drosselventil (1, 25) mit einem Gehäuse (2), das eine Einlassöffnung (3) für ein Fluid unter einem Einlassdruck, eine Drossel (4, 27), die einen rohrförmigen Drosselkäfig (15) aufweist, mittels derer das Fluid auf einen Auslassdruck drosselbar ist, und eine Auslaßöffnung (5) für das Fluid aufweist, sowie mit einem Stellelement (11, 32) außen an dem Gehäuse (2), mit einer rotierbaren Welle (13) und einem Kolben (16), der innerhalb des Gehäuses (2) in dem rohrförmigen Drosselkäfig (15) axial verschiebbar ist, wobei mittels des Stellelements (11, 32) eine Rotation der Welle (13) und über die Rotation der Welle (13) eine axiale Verschiebung des Kolben (16) induzierbar und durch die axiale Verschiebung des Kolben (16) ein Drosselquerschnitt der Drossel (4, 27) einstellbar ist, mit an dem Stellelement (11, 32) angebrachten Primärmagneten, mit an der Welle (13) angebrachten Sekundärmagneten mit einem an der Welle (13) angebrachten Wälzkörper-Gewindetrieb (20), wobei eine Rotation des Stellelements (11, 32) mittels magnetischer Kopplung der Primärmagnete mit den Sekundärmagneten auf die Welle (13) übertragen und mittels des Wälzkörper-Gewindetriebs (20) in die axiale Verschiebung des Kolben (16) umsetzt wird.

2. Drosselventil (1, 25) nach dem vorgenannten Anspruch, ***gekennzeichnet durch*** eine Schaltspindel (21, 26), wobei die Rotation des Stellelements (11, 32) mittels des Wälzkörper-Gewindetriebs (20) zunächst in eine Linearbewegung der Schaltspindel (21, 26) umgesetzt wird, sowie **durch** einen schrägverzahnten Zahnstangentrieb (22), mittels dessen die Linearbewegung in die axiale Verschiebung des Kolben (16) umgesetzt wird.

3. Drosselventil (1, 25) nach Anspruch 1, ***dadurch gekennzeichnet, dass*** die Rotation des Stellelements (11, 32) mittels des Wälzkörper-Gewindetriebs (20) unmittelbar in die axiale Verschiebung des Kolben (16) umgesetzt wird.

4. Drosselventil (1, 25) nach einem der vorgenannten Ansprüche, ***gekennzeichnet durch*** ein elektromotorisches Antriebselement zum Einstellen des Drosselquerschnitts.

5. Drosselventil (1, 25) nach dem vorgenannten Anspruch, ***dadurch gekennzeichnet, dass*** das Stellelement (11, 32) als Stator und die Welle (13) als Rotor des Antriebselements, sowie die Primärmagnete als Elektromagnete und die Sekundärmagnete als Permanentmagnete ausgebildet sind.

6. Drosselventil (1, 25) nach einem der vorgenannten Ansprüche, ***gekennzeichnet durch*** ein Federelement (23), das ausgehend von einer Grundstellung des Kolben (16) mit der Rotation des Stellelements (11, 32) gespannt wird und mittels dessen der Kolben (16) in die Grundstellung rückführbar ist.

7. Drosselventil (1, 25) nach den Ansprüchen 2 und 6, ***dadurch gekennzeichnet, dass*** das Federelement (23) an der Schaltspindel (21, 26) angebracht ist und durch deren Linearbewegung gespannt wird.

8. Drosselventil (1, 25) nach dem vorgenannten Anspruch, ***dadurch gekennzeichnet, dass*** das Federelement (23) innerhalb des Gehäuses (2) angeordnet ist.

9. Drosselventil (1, 25) nach Anspruch 6, ***dadurch gekennzeichnet, dass*** das Federelement (23) an dem Stellelement (11, 32) angebracht ist und durch die Rotation des Stellelements (11, 32) gespannt wird.

10. Drosselventil (1, 25) nach einem der Ansprüche 6 bis 9, ***dadurch gekennzeichnet, dass*** in der Grundstellung des Kolben (16) der Drosselquerschnitt maximal geöffnet ist.

11. Drosselventil (1, 25) nach einem der vorgenannten Ansprüche, ***dadurch gekennzeichnet, dass*** der Wälzkörper-Gewindetrieb (20) die NACE- und ISO-Standards für Korrosionsschutz in der Öl- und Gasindustrie erfüllt.

## Claims

1. A flow control valve (1, 25) with a housing (2) that is provided with an inlet (3) for admitting a fluid at a certain inlet pressure, a restrictor (4, 27) that features a tubular restrictor cage (15) and makes it possible to restrict the fluid to a certain discharge pressure, as well as an outlet (5) for the fluid, with an actuator (11, 32) that is externally arranged on the housing (2) and features a rotatable shaft (13) and a piston (16) that can be axially displaced within the housing (2) in the tubular restrictor cage (15), wherein a rotation of the shaft (13) can be induced by means of the actuator (11, 32) and an axial displacement of the piston (16) can be induced by means of the rotation of the shaft (13) while a restrictor cross section of the restrictor (4, 27) can be adjusted by means of the axial displacement of the piston (16), with primary magnets that are mounted on the actuator (11, 32), with secondary magnets that are mounted on the shaft (13) and with a rolling body screw drive (20) that is mounted on the shaft (13), wherein a rotation of the actuator (11, 32) is transmitted to the shaft (13) by magnetically coupling the primary magnets to the secondary magnets and converted into the axial displacement of the piston (16) by means of the rolling body screw drive (20).

2. The flow control valve (1, 25) according to the preceding claim, ***characterized by*** an indexing spindle (21, 26), wherein the rotation of the actuator (11, 32) is initially converted into a linear motion of the indexing spindle (21, 26) by means of the rolling body screw drive (20), as well as by a helically geared rack-and-pinion drive (22), by means of which the linear motion is converted into the axial displacement of the piston (16).

3. The flow control valve (1, 25) according to Claim 1, ***characterized in that*** the rotation of the actuator (11, 32) is directly converted into the axial displacement of the piston (16) by means of the rolling body screw drive (20).

4. The flow control valve (1, 25) according to one of the preceding claims, ***characterized by*** an electromotive drive element for adjusting the restrictor cross section.

5. The flow control valve (1, 25) according to the preceding claim, ***characterized in that*** the actuator (11, 32) is realized in the form of a stator of the drive element and the shaft (13) is realized in the form of a rotor of the drive element, and by the fact that the primary magnets are realized in the form of electromagnets and the secondary magnets are realized in the form of permanent magnets.

6. The flow control valve (1, 25) according to one of the preceding claims, ***characterized by*** a spring element (23) that is tensioned starting from a normal position of the piston (16) due to the rotation of the actuator (11, 32) and makes it possible to return the piston (16) into the normal position.

7. The flow control valve (1, 25) according to Claims 2 and 6, ***characterized in that*** the spring element (23) is mounted on the indexing spindle (21, 26) and tensioned due to the linear motion thereof.

8. The flow control valve (1, 25) according to the preceding claim, ***characterized in that*** the spring element (23) is arranged within the housing (2).

9. The flow control valve (1, 25) according to Claim 6, ***characterized in that*** the spring element (23) is arranged on the actuator (11, 32) and tensioned due to the rotation of the actuator (11, 32).

10. The flow control valve (1, 25) according to one of Claims 6 to 9, ***characterized in that*** the restrictor cross section is maximally opened in the normal position of the piston (16).

11. The flow control valve (1, 25) according to one of the preceding claims, ***characterized in that*** the rolling body screw drive (20) complies with the NACE and ISO standards for corrosion protection in the oil and gas industry.

## Revendications

1. Soupape d'étranglement (1,25) comportant un logement (2), qui présente une ouverture d'admission (3) d'un fluide sous une pression d'admission, un étranglement (4,27), qui présentent une cage d'étranglement (15) tubulaire, au moyen duquel le fluide peut être étranglé à une pression d'échappement, et une ouverture d'échappement (5) du fluide, ainsi qu'un élément d'ajustement (11,32) à l'extérieur sur le logement (2), un arbre rotatif (13) et un piston (16), qui est déplaçable axialement à l'intérieur du logement (2) dans la cage d'étranglement (15) tubulaire, dans laquelle au moyen de l'élément d'ajustement (11,32) une rotation de l'arbre (13) peut être induite et un déplacement axial du piston (16) peut être induit par le rotation de l'arbre et une section transversale d'étranglement de l'étranglement (4,27) peut être réglée par l'intermédiaire du déplacement axial du piston (16), comportant des aimants primaires montés sur l'élément d'ajustement (11,32), comportant des aimants secondaires montés sur l'arbre (13) ainsi qu'un entraînement fileté à corps de roulements (20) monté sur l'arbre (13), dans laquelle une rotation de l'élément d'ajustement (11,32) est transmise au moyen d'un accouplement magnétique des aimants primaires avec les aimants secondaires sur l'arbre (13) et est convertie au moyen de l'entrainement fileté à corps de roulement (20) en déplacement axial du piston (16).

2. Soupape d'étranglement (1,25) selon la revendication précédente, **caractérisée par** un arbre sélecteur (21,26), dans laquelle la rotation de l'élément d'ajustement (11,32) est d'abord convertie au moyen de l'entraînement fileté à corps de roulements (20) en un mouvement linéaire de l'arbre sélecteur (21,26), ainsi que par un mécanisme à crémaillère (22) à denture oblique au moyen duquel le mouvement linéaire est converti en déplacement axial du piston (16).

3. Soupape d'étranglement (1,25) selon la revendication 1, **caractérisée en ce que** la rotation de l'élément d'ajustement (11,32) est convertie au moyen de l'entraînement fileté à corps de roulement (20) directement en déplacement axial du piston (16).

4. Soupape d'étranglement (1,25) selon une des revendications précédentes, **caractérisée par** un élément d'entraînement électromotorisé pour régler la section transversale d'étranglement.

5. Soupape d'étranglement (1,25) selon la revendication précédente, **caractérisée en ce que** l'élément d'ajustement (11,32) est conçu comme un stator et l'arbre (13) est conçu comme un rotor de l'élément d'entraînement, et les aimants primaires sont conçus comme des électroaimants et les aimants secondaires sont conçus comme des aimants permanents.

6. Soupape d'étranglement (1,25) selon une des revendications précédentes, **caractérisée par** un élément de ressort (23), qui est tendu à partir d'une position de base du piston (16) avec la rotation de l'élément d'ajustement (11,32), et au moyen duquel le piston (16) peut être ramené à la position de base.

7. Soupape d'étranglement (1,25) selon les revendications 2 et 6, **caractérisée en ce que** l'élément de ressort (23) est monté sur l'arbre sélecteur (21,26) et est tendu par le mouvement linéaire de celui-ci.

8. Soupape d'étranglement (1,25) selon la revendication précédente, **caractérisée en ce que** l'élément de ressort (23) est disposé à l'intérieur du logement (2).

9. Soupape d'étranglement (1,25) selon la revendication 6, **caractérisée en ce que** l'élément de ressort (23) est monté sur l'élément d'ajustement (11,32) et est tendu par la rotation de l'élément d'ajustement (11,32).

10. Soupape d'étranglement (1,25) selon une des revendications 6 à 9, **caractérisée en ce que** dans la position de base du piston (16) la section transversale d'étranglement est ouverte au maximum.

11. Soupape d'étranglement (1,25) selon une des revendications précédentes, **caractérisée en ce que** l'entraînement fileté à corps de roulements (20) satisfait aux normes ACE et ISO de protection contre la corrosion dans l'industrie pétrolière et gazière.
